# EUROPEAN PATENT SPECIFICATION

(11) **EP 1 645 001 B1**
(45) Date of publication and mention of the grant of the patent: **02.01.2008**
(21) Application number: 04740262.3
(22) Date of filing: 24.06.2004
(51) Int. Cl.: H01M 4/88, H01M 8/10

(54) **PROCESS FOR MANUFACTURING A CATALYST-COATED POLYMER ELECTROLYTE MEMBRANE**
PROZESS ZUR HERSTELLUNG EINER KATALYSATORBESCHICHTETEN POLYMER-ELEKTROLYT-MEMBRAN
PROCEDE DE FABRICATION D'UNE MEMBRANE A POLYMERE ELECTROLYTE REVETUE PAR UN CATALYSEUR

(30) Priority: 27.06.2003 EP 03014405
(43) Date of publication of application: 12.04.2006
(73) Proprietor: Umicore AG & Co. KG, 63457 Hanau-Wolfgang (DE)
(72) Inventor: HOHENTHANNER, Claus-Rupert, 63457 Hanau (DE); KÜHNHOLD, Heike, 63486 Bruchköbel (DE); BARTH, Bernhardt, 33647 Bielefeld (DE); SEIPEL, Peter, 63755 Alzenau (DE)
(86) International application number: PCT/EP2004/006849
(87) International publication number: WO 2005/001966

(56) References cited:
- WO-A-03/036748
- JP-A- 2001 160 405
- US-A1- 2002 064 593
- PATENT ABSTRACTS OF JAPAN vol. 1995, no. 10, 30 November 1995 (1995-11-30) & JP 07 176317 A (SANYO ELECTRIC CO LTD), 14 July 1995 (1995-07-14)

## Description

The invention relates to a process for manufacturing a catalyst-coated polymer electrolyte membrane ("CCM") according to claim 1 for electrochemical devices such as, e.g., fuel cells, electrochemical sensors or electrolyzers.

Fuel cells convert a fuel and an oxidising agent into electricity, heat and water at two spatially separated electrodes. Hydrogen, methanol or a hydrogen-rich gas can be used as the fuel and oxygen or air as the oxidising agent. The energy conversion process in the fuel cell is distinguished by particularly high efficiency. For this reason, fuel cells are gaining increasing importance for alternative propulsion concepts, stationary power supply systems and portable applications.

Due to their low operation temperature, their compact structure and their power density, membrane fuel cells, e.g. the polymer electrolyte membrane fuel cell ("PEMFC") and the direct methanol fuel cell ("DMFC"), are suitable for a wide range of mobile and stationary applications.

PEM fuel cells are built by stacking a plurality of fuel cell units. The individual units are electrically connected in series in order to increase the operating cell voltage.

The main part of a PEM fuel cell is the so-called membrane-electrode-assembly (MEA). The MEA comprise a proton-conducting membrane (polymer electrolyte or ionomer membrane), two gas diffusion layers (GDLs) arranged at the sides of the membrane and the electrode layers arranged between the membrane and the respective gas diffusion layer. One of the electrode layers serves as anode for the oxidation of water and the second electrode layer serves as cathode for the reduction of oxygen.

The polymer electrolyte membrane consists of proton-conducting polymer materials. This materials are shortly called "ionomers" hereinafter. A tetrafluoroethylene-fluoro-vinylether-copolymer having sulfonic acid groups is preferably used. This material is available, e.g., under the trademark Nafion® by DuPont. However, other materials, especially fluorine-free ionomer materials like doped sulfonized polyetherketones or doped sulfonized or sulfinized arylketones or polybenzimidazoles can be used. Suitable ionomer materials are described by O. Savadogo in the "Journal of New Materials for Electrochemical Systems" I, 47-66 (1998). For the use in fuel cells, these membranes generally have a thickness of between 10 µm and 200 µm.

The electrode layers for anode and cathode comprise a proton-conducting polymer and electrocatalysts, which catalytically promote the respective reactions (oxidation of hydrogen and reduction of oxygen). The metals of the platinum group of the periodic system of elements are preferably used as catalytically active components. In most cases, so-called supported catalysts are used, in which the catalytically active platinum group metals are fixed to the surface of a electrically conductive support material, e.g., carbon black, in a highly dispersed form.

The gas diffusion layers (GDLs) usually consist of a carbon fiber paper or carbon fiber cloth and allow a good access of the reactant gases to the reaction layers. Furthermore, they serve as good conductors for the current generated in the fuel cell and remove the product water formed.

The present invention relates to the manufacturing of 3-layer catalyst-coatetd membranes (CCMs) by direct coating methods. For manufacturing such catalyst-coated membranes ("3-layer CCMs") the electrode layers are mostly applied to the front and back side of the polymer electrolyte membrane by printing, doctor-blading, rolling or spraying of a paste. The pasty compositions are also referred to as inks or catalyst inks in the following. Besides the catalyst, they usually contain a proton-conductive material, various solvents as well as optionally finely dispersed hydrophobic materials, additives and pore formers.

Commercialization of the PEM fuel cell technology requires industrial-scale production methods for catalyst-coated membranes (CCMs) and membrane-electrode-assemblies (MEAs) in order to make them available in commercial quantities for mobile, stationary and portable applications. The following documents show the state of the art in this field.

WO 97/23919 describes a method for manufacturing membrane-electrode-assemblies whereby the polymer membrane, the electrode layers and the gas diffusion layers are continuously bonded together by rolling. This method relates to the manufacturing of MEAs with five layers, a direct coating of the ionomer membrane (CCM production) is not mentioned.

EP 1 198 021 discloses a continuous method for manufacturing MEAs having five layers, in which the opposite side of the membrane is supported during application of the catalyst layer. Contrary to the process according to the present invention, the side of the membrane lying opposite to the catalyst layer is supported during printing by a gas diffusion layer (GDL) in tape form (and not by a temporarily applied film). Ate end of the process, the gas diffusion layer in tape form remains as a component of the 5-layer MEA.

EP 1037 295 describes a continuous process for the selective application of electrode layers onto an ionomer membrane in tape form, in which the front and the back side of the membrane is coated by printing. Here, the membrane must have a specific water content (from 2 wt.-% to 20 wt.-%). Due to the swelling and the dimensional changes of the membrane during the coating process, the positioning accuracy between the front and backside prints becomes critical, especially when using thin membranes with less than 50 µm thickness.

US 6,074,692 describes a continuous method for coating an ionomer membrane. The membrane is pre-swollen in an organic solvent and then coated. The shrinkage of the membrane during the drying process is impeded by clamps.

WO 02/43171 suggests a flexographic printing method in which a thin catalyst layer is transferred to the membrane by a printing device having the shape of a drum. By applying multiple very thin layers, it is attempted to reduce the swelling of the membrane.

JP 2001 160 405 discloses a process for manufacturing a catalyst-coated ionomer membrane, too. Here, the membrane is fixed to a support substrate which is removed after the coating of the frontside and the drying thereof. Before coating the backside, the membrane is fixed to a further support substrate. Substrates based on polyester or Teflon as well as glass plates are suggested. The handling of the membrane during the coating of the front and the backside of the membrane is done while the membrane is not supported. Thus, this process is not continuous and not suitable for series production of catalyst-coated membranes.

The industrial production of 3-layer catalyst-coated membranes (CCMs) still provides problems, which have not been solved by the known measures in a satisfactory manner. Especially, the swelling of the membrane during coating with solvent-based inks, the shrinkage during the subsequent drying steps as well as the high sensitivity of the membranes during handling and processing present challenges to a suitable continuous manufacturing process.

Thus, it is the object of the present invention to provide an improved process for manufacture of catalyst-coated polymer electrolyte membranes. This process should overcome the above-indicated disadvantages of the state of the art.

This object is solved by the process according to claim 1 and a corresponding apparatus. Advantageous embodiments are described in subsequent claims.

A particularly preferred process according to the present invention comprises several steps and is characterized in that
(a) the frontside of a strip-shaped polymer electrolyte membrane, comprising a first supporting foil on its back side, is coated with a catalyst ink and dried at an elevated temperature,
(b) a second supporting foil is applied to the front side of the polymer electrolyte membrane,
(c) the first supporting foil is removed from the back side of the polymer electrolyte membrane,
(d) subsequently the backside of the polymer electrolyte membrane is coated with a catalyst ink and dried at an elevated temperature.

The second supporting foil on the front side of the membrane can be removed, if necessary, immediately after the first step or in the course of further processing steps. Further processing steps may embrace, e.g., the post-treatment of the CCM in an aqueous bath, the assembly of the CCM with the gas diffusion layers (GDLs) to form 5-layer MEAs or the bonding of the CCM with protective layers and/or sealing components. Generally, if an improved handling throughout the process is required, the second supporting foil may remain on the polymer electrolyte membrane and may only be removed for the final assembly of the MEA or the fuel cell stack.

Preferably, strip- or tape-shaped ionomer membranes are used, which are already laminated onto a supporting foil when supplied. In the meantime, various membrane suppliers offer such products. If an unsupported strip-shaped membrane must be used in the process according to the present invention, the back side of the membrane is laminated with a first supporting foil in a separate simple process step beforehand.

In the first process step (a), a catalyst ink is applied to the front side of the supported membrane. After drying of the catalyst ink, a second supporting foil is applied to the front side of the coated membrane in the second process step (b) and subsequently, in the third process step (c), the first supporting foil on the backside of the membrane is removed. In the present application, the process steps (b) and (c) are, in summary, also referred to as "trans-lamination".

In a final process step (d), the back side of the membrane is coated and subsequently dried.

As already mentioned, the second supporting foil on the front side of the membrane may be removed, if necessary, immediately or in the course of later processing steps.

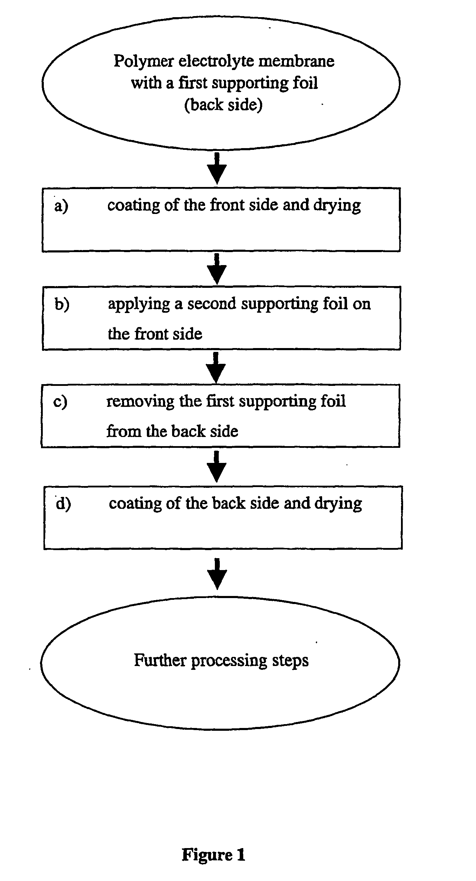

**Figure 1** shows the procedural flow of the process according to the present invention.

A feature of the process according to the present invention is the continuous production flow when using strip-shaped substrates. It should be noted, that the polymer membrane as well as the supporting foil can be used in strip form.

A further feature of the process of the present invention is the application of a second supporting foil onto the front side of the membrane prior to the back side is coated in the second coating step. In a preferred embodiment, the second supporting foil is applied before the first supporting foil is removed. Thus, problems ocurring during the removal/delamination of the first supporting foil (for example due to uneven stretching, forming of folds, sagging etc.) are avoided.

The process according to the present invention is characterized by the fact, that the membrane is in contact or connected with at least one supporting foil during all processing steps. Therefore, the membrane can be processed economically and efficiently (i.e., with high speed and high quality). Thus, smooth, wrinkle-free and accurately printed catalyst-coated membranes (CCMs) are obtained.

In a specific embodiment of the process according to the present invention, punched or perforated films are used as supporting foils. Here, the perforation or punching technique has an influence on the lamination properties of the supporting foil. Perforations having the shape of dots or slits can be used. They can be manufactured by punching, stamping, hot-needle or gas-flame perforation methods or also electrostatically. Typical perforation patterns comprise 5 to 20 holes per square centimeter (cm²) foil, whereby the holes have a diameter in the range of about 0,2 mm to 3 mm. Under the term "holes", it is referred to all kinds of openings or gaps in the support foil or film, e.g., non-circular punched openings.

It has been found, that the ionomer membrane shows considerably less contractions and/or wrinkles if perforated supporting foils are used. Apparently, the solvent can be better removed through the holes or openings during the drying process following the coating. Additionally, the perforated supported foil allows the membrane to swell due to the penetrating solvent to a certain degree after coating and to contract again in the course of the drying process. The use of perforated supporting foils is particularly advantageous for langer printing formats (i.e., CCMs with an active area greater than 200 cm²), in the case of full-area prints and when thin ionomer membranes (thickness less than 50 µm) are used.

Continuous lamination methods using rollers or presses in a wide range of temperatures or pressures are used for applying the supporting films onto the polymer electrolyte membrane. Depending on the material combination of the films to be processed, no additional components may be necessary for the lamination process. In certain cases, the adhesion forces between the supporting foil and the membrane may already provide sufficient adhesion. If an improved adhesion between supporting foil and membrane is desired, so-called adhesive materials may be applied to the edges of the coated side of the membrane. Here, liquid adhesives or adhesive tapes can be used. The lamination conditions are accordingly adapted.

The hot needle perforation method can be used to improve the bonding, too. Here, the supporting foil to be bonded and the ionomer membrane are molten in the pricking area of the hot needle and thus good adhesion is obtained.

Foils or films of polyester, polyethylene, polytetrafluoroethylene (PTFE), polypropylene (PP), polyvinyl chloride (PVC), polycarbonate, polyamide, polyimide, polyurethane or of comparable foil materials are suitable as supporting foils for the front and the backside. Furthermore, laminated films, e.g., of polyester/polyethylene, polyamide /polyethylene, polyamide/polyester, polyester/paper, polyethylene/aluminum etc. can be used. Furthermore metal foils and paper materials can be used. The foil materials have a thickness range of 10 µm to 250 µm and a dimensional width of up to a maximum of 750 mm.

Generally, as material for the second supporting foil, the same films and foils as for the first supporting foil can be used.

Suitable devices for continuous processing, coating and lamination of tape-shaped films or foils in a roll-to-roll process are known to the person skilled in the art. The coating of the front side and the back side of the ionomer membrane can be achieved by different methods. Examples are, inter alia, screen printing, stencil printing, offset printing, transfer printing, doctor-blading or spraying. These methods are suitable for the processing of polymer electrolyte membranes comprising of polymeric perfluorinated sulphonic acids compositions, doped polybenzimidazoles, polyether ketones and polysulphones in the acid or the alkaline form. Composite and ceramic membranes can be used, too.

Suitable continuous drying methods are, inter alia, hot air drying, infrared drying, micro-wave drying, plasma methods and/or combinations thereof. The drying profile (temperature and time) is selected according to the specific process. Suitable temperatures are in the range of 20 to 150°C, suitable drying times are between 1 and 30 minutes.

The electrode layers on both side of the ionomer membrane may differ from each other. They can be made from different catalyst inks and can have different amounts of catalyst and precious metal loadings (in mg Pt/cm²). In the inks, different electrocatalysts, e.g., precious metal containing and base metal containing supported catalysts, Pt- or PtRu-catalysts as well as unsupported Pt and PtRu powders and blacks can be used, depending on the type of fuel cell for which the CCMs or MEAs are made.

The following examples will explain the process according to the present invention in more detail without limiting the scope of the invention.

### Example 1:

For producing a membrane-electrode-assembly according to the process of the present invention, a catalyst ink having the following composition was used:

| **Composition of the catalyst ink (anode and cathode):** | |
|---|---|
| 15,0 g | Pt-supported catalyst (40 wt.-% Pt on carbon black) |
| 44,0 g | Nafion® solution (11,4 wit.-% in water) |
| 41,0 g | Propylene glycol |
| 100,0 g | |

A strip of 30 cm width and 50 m length of a polymer electrolyte membrane (Nafion® 112, DuPont; H⁺-form, 50 µm thickness) which is supported on one surface by a laminated polyester foil (50 µm thickness), is first coated with the catalyst ink by screen printing on the front surface in a continuous roll-to-roll coating device (set-up described in EP 1 037 295). The coated area is 225 cm² (dimensions of the active area: 15 x 15 cm). After printing, the catalyst-coated membrane is dried with hot air in a continuous belt dryer and is wound up by a winder.

After coating of the first side, a second perforated supporting foil (polyester, perforation pattern 12 holes/cm², hole diameter 0,5 mm) is laminated onto the coated front side. For this means, the coated membrane is supplied and positioned in a wrinkle-free form to a lamination device (comprising of a roll-to-roll lamination machine with a winding and unwinding unit, driving rolls, etc.). Simultaneously, the second supporting foil is accurately provided. The bonding of the second supporting film to the membrane is achieved by a heated roller. Subsequently the first supporting foil is removed from the membrane and is winded up.

After the trans-lamination, the membrane is accurately coated on its backside with the same catalyst ink in a single printing process. The drying profile is adjusted to a maximum temperature of 75°C and a total drying time of 5 min.

Subsequently, the second perforated supporting is removed and the catalyst-coated, strip-shaped ionomer membrane (CCM) is watered in deionized water (DI water) having a temperature of 80°C, subsequently dried and wound up. The CCMs thus produced comprise a total platinum loading of 0,6 mg Pt/cm² in their active area (0,2 mg Pt/cm² on the anode, 0,4 mg Pt/cm² on the cathode).

For electrochemical testing, an active area of 7 x 7 cm (50cm²) is cut out from a coated membrane area and this CCM is processed to form a 5-layer membrane-electrode-assembly (MEA). Therefore, hydrophobized carbon fiber paper (Toray TGPH-060, 200 µm thickness) is applied on both sides of the CCM, this structure is assembled by hot pressing and the MEA thus obtained is mounted into a PEMFC single cell. For performance testing hydrogen (H₂) is used as anode gas and air is used as cathode gas. The cell temperature is 75°C. Humidification of the anode and the cathode is conducted at 75°C. The working gases have a pressure of 1,5 bar (absolute). The cell voltage measured is 720 mV at a current density of 600 mA/cm². This corresponds to a power density of about 0,43 W/cm².

### Example 2:

A MEA to be used in a direct methanol fuel cell (DMFC) is produced. An extruded ionomer membrane in strip-form with a thickness of 87,5 µm is used as membrane, to which a first supporting foil of polyester is laminated. The polymer electrolyte membrane is then coated with an anode ink on the front side, the ink having the following composition:

| **Composition of the anode ink** | |
|---|---|
| 15,0 g | PtRu-supported catalyst (60 wt.% PtRu/C, ref. to US 6,007,934) |
| 60,0 g | Nafion® solution (10 wt-% in water) |
| 15,0 g | Water (deionized) |
| 10,0 g | Propylene glycol |
| 100,0 g | |

The printing format is 7 x 7 cm (active area 50 cm²). After printing, the coated membrane is dried with hot air in a continuous belt dryer and is wound up by a winder.

After the coating of the first side, a second perforated supporting foil (polyester, perforation pattern 12 holes/cm², hole diameter 0,5 mm) is laminated onto the catalyst-coated frontside. Therefore, the membrane is provided in a wrinkle-free form to a lamination unit and accurately positioned. Simultaneously, the second supporting foil is accurately provided. The lamination of the second supporting film with the membrane is achieved by a heated roller. Subsequently, the first supporting foil is removed from the membrane and is wound up.

The coating of the backside of the supported membrane is conducted with the Pt-catalyst ink from example 1 in a single printing process. The drying profile is adjusted to maximum temperature of 75°C and a total drying time of 5 min. Subsequently, the strip-shaped catalyst coated membrane (CCM) with the perforated supporting foil is watered in deionized water having a temperature of 80°C, dried and then wound up. The precious metal loading of the catalyst-coated membrane is 1 mg PtRu/cm² on the anode and 0,6 mg Pt/cm² on the cathode.

In order to assemble a 5-layer MEA, the perforated second supporting foil is removed, the CCMs are cut into a single units, and two gas diffusion layers (consisting of hydrophobized carbon fiber paper) are applied to the front and back side of each CCM. Subsequently, the assembly is achieved by hot pressing at a temperature of 140°C and a pressure of 60 bar.

The MEAs are tested in a DMFC test station with an active cell area of 50 cm². Air is used as cathode gas. An average power density of 65 mW/cm² is obtained (2-molar MeOH solution, cell temperature 60°C).

## Claims

1. A process for manufacturing a 3-layer catalyst-coated polymer electrolyte membrane with catalyst layers on the front and on the back side of the membrane coated by use of catalyst-containing inks,
wherein the polymer electrolyte membrane is connected with at least one supporting foil during at least all coating steps and wherein at least one supporting foil is perforated.

2. The process according to claim 1,
wherein the process is conducted continuously and the polymer electrolyte membrane as well as at least one supporting foil are provided in tape form.

3. The process according to claim 1,
wherein a second supporting foil is applied to the front side of the polymer electrolyte membrane after the first coating step of the front side,
the first supporting foil is removed from the back side of the polymer electrolyte membrane and subsequently the coating of the back side of the polymer electrolyte membrane is conducted.

4. The process according to claim 1,
wherein at least one supporting foil is fixed to the edge area of the catalyst-coated polymer electrolyte membrane by a lamination process.

5. Process according to claim 1, wherein the at least one supporting foil is perforated in perforation patterns comprising 5 to 20 holes per square centimeter (cm²) foil, whereby the holes have a diameter in the range of about 0,2 mm to 3 mm.

6. The process according to claim 1,
wherein the polymer electrolyte membrane comprises of polymeric, perfluorinated sulphonic acid compositions, doped polybenzimidazoles, polyetherketones and polysulphones or other proton-conducting materials.

7. The process according to claim 1, wherein the polymer electrolyte membrane has a thickness in the range of 10 to 200 µm.

8. The process according to claim 1,
wherein the at least one supporting foil comprises of polyester, polyethylene, polypropylene, polycarbonate, polytetrafluoroethylene, polyurethane, polyamide, polyimide, paper or other comparable materials

9. The process according to claim 1,
wherein the at least one supporting foil has a thickness in the range of of 10 to 250 µm.

10. The process according to claim 1,
wherein screen printing, stencil printing, offset printing, transfer printing, doctor-blading or spraying is used as coating method.

11. The process according to claim 1, comprising the steps
(a) coating the front side of a supported polymer electrolyte membrane having a first supporting foil on its back side with a catalyst layer and drying,
(b) applying a second supporting foil to the front side of the polymer electrolyte membrane,
(c) removing the first supporting foil from the backside of the polymer electrolyte membrane,
(d) coating the back side of the polymer electrolyte membrane with a catalyst layer and drying.

12. The process according to claim 11, further comprising
applying a first supporting foil to the back side of an unsupported polymer electrolyte membrane.

13. The process according to claim 11, further comprising
removing the second supporting foil after the coating of the back side of the polymer electrolyte membrane.

14. The process according to claim 11, further comprising
applying an adhesive component between supporting foil and polymer electrolyte membrane.

15. The process according to claim 11, further comprising
post-treating the coated polymer electrolyte membrane in water at temperatures in the range of 20 to 95°C.

16. The process according to claim 11,
wherein the drying of the catalyst layer is performed by means of hot air, infrared, microwave, plasma or combinations thereof.

17. The process according to claim 11,
wherein the drying temperature is in the range of 20 to 150°C and the drying period is in the range of 1 to 30 minutes.

18. Apparatus for manufacture of 3-layer catalyst-coated polymer electrolyte membranes by use of catalyst-containing inks according to the process of any one of claims 1 to 17, comprising
means for supporting the polymer electrolyte membrane with at least one supporting foil during all processing steps.

## Patentansprüche

1. Prozeß zur Herstellung einer dreilagigen katalysatorbeschichteten Polymerelektrolytmembran, wobei Katalysatorschichten auf der Vorder- und auf der Rückseite der Membran unter Verwendung von katalysatorhaltigen Tinten beschichtet werden,
wobei die Polymerelektrolytmembran während mindestens aller Beschichtungsschritte mit mindestens einer Trägerfolie verbunden ist und wobei mindestens eine Trägerfolie perforiert ist.

2. Prozeß nach Anspruch 1,
wobei der Prozeß kontinuierlich durchgeführt wird und die Polymerelektrolytmembran sowie mindestens eine Trägerfolie in Bandform bereitgestellt werden.

3. Prozeß nach Anspruch 1,
wobei eine zweite Trägerfolie auf die Vorderseite der Polymerelektrolytmembran nach dem ersten Beschichtungsschritt der Vorderseite aufgebracht wird,
die erste Trägerfolie von der Rückseite der Polymerelektrolytmembran entfernt wird und danach die Beschichtung der Rückseite der Polymerelektrolytmembran durchgeführt wird.

4. Prozeß nach Anspruch 1,
wobei mindestens eine Trägerfolie am Randbereich der katalysatorbeschichteten Polymerelektrolytmembran durch einen Laminierungsprozeß fixiert wird.

5. Prozeß nach Anspruch 1,
wobei die mindestens eine Trägerfolie in Perforationsmustern perforiert wird, die 5 bis 20 Löcher pro Quadratzentimeter (cm²) Folie umfassen, wobei die Löcher einen Durchmesser im Bereich von etwa 0,2 mm bis 3 mm aufweisen.

6. Prozeß nach Anspruch 1,
wobei die Polymerelektrolytmembran polymere perfluorierte Sulfonsäureverbindungen, dotierte Polybenzimidazole, Polyetherketone und Polysulfone oder andere protonenleitende Materialien umfaßt.

7. Prozeß nach Anspruch 1,
wobei die Polymerelektrolytmembran eine Dicke im Bereich von 10 bis 200 µm aufweist.

8. Prozeß nach Anspruch 1,
wobei die mindestens eine Trägerfolie Polyester, Polyethylen, Polypropylen, Polycarbonat, Polytetrafluorethylen, Polyurethan, Polyamid, Polyimid, Papier oder andere vergleichbare Materialien umfaßt.

9. Prozeß nach Anspruch 1,
wobei die mindestens eine Trägerfolie eine Dicke im Bereich von 10 bis 250 µm aufweist.

10. Prozeß nach Anspruch 1,
wobei als Beschichtungsverfahren Siebdruck, Schablonendruck, Offsetdruck, Transferdruck, Rakeln oder Sprühen verwendet wird.

11. Prozeß nach Anspruch 1, umfassend die folgenden Schritte:
(a) Beschichten der Vorderseite einer gestützten Polymerelektrolytmembran, die eine erste Trägerfolie auf ihrer Rückseite besitzt, mit einer Katalysatorschicht und Trocknen,
(b) Aufbringen einer zweiten Trägerfolie auf die Vorderseite der Polymerelektrolytmembran,
(c) Entfernen der ersten Trägerfolie von der Rückseite der Polymerelektrolytmembran,
(d) Beschichten der Rückseite der Polymerelektrolytmembran mit einer Katalysatorschicht und Trocknen.

12. Prozeß nach Anspruch 11, weiterhin umfassend:
Aufbringen einer ersten Trägerfolie auf die Rückseite einer ungestützten Polymerelektrolytmembran.

13. Prozeß nach Anspruch 11, weiterhin umfassend:
Entfernen der zweiten Trägerfolie nach dem Beschichten der Rückseite der Polymerelektrolytmembran.

14. Prozeß nach Anspruch 11, weiterhin umfassend:
Aufbringen einer Klebekomponente zwischen Trägerfolie und
Polymerelektrolytmembran.

15. Prozeß nach Anspruch 11, weiterhin umfassend:
Nachbehandlung der beschichteten Polymerelektrolytmembran in Wasser bei Temperaturen im Bereich von 20 bis 95°C.

16. Prozeß nach Anspruch 11,
wobei das Trocknen der Katalysatorschicht mit Hilfe von Heizluft, Infrarot, Mikrowelle, Plasma oder Kombinationen davon erfolgt.

17. Prozeß nach Anspruch 11,
wobei die Trocknungstemperatur im Bereich von 20 bis 150°C liegt und die Trocknungszeit im Bereich von 1 bis 30 Minuten liegt.

18. Vorrichtung zur Herstellung von dreilagigen katalysatorbeschichteten Polymerelektrolytmembranen durch Verwendung von katalysatorhaltigen Tinten gemäß dem Prozeß nach einem der Ansprüche 1 bis 17, umfassend
Mittel zum Unterstützen der Polymerelektrolytmembran mit mindestens einer Trägerfolie während aller Verarbeitungsschritte.

## Revendications

1. Procédé de fabrication d'une membrane à électrolyte polymère revêtue d'un catalyseur à 3 couches avec les couches de catalyseur sur les faces avant et arrière de la membrane déposées à l'aide d'encres contenant un catalyseur,
dans lequel la membrane à électrolyte polymère est assemblée à au moins une feuille de support pendant au moins toutes les étapes de revêtement et dans lequel au moins une feuille de support est perforée.

2. Procédé selon la revendication 1,
dans lequel le procédé est conduit en continu et la membrane à électrolyte polymère ainsi qu'au moins une feuille de support sont fournies sous forme de ruban.

3. Procédé selon la revendication 1,
dans lequel une deuxième feuille de support est appliquée à la face avant de la membrane à électrolyte polymère après la première étape de revêtement de la face avant,
la première feuille de support est retirée de la face arrière de la membrane à électrolyte polymère puis le revêtement de la face arrière de la membrane à électrolyte polymère est effectué.

4. Procédé selon la revendication 1,
dans lequel au moins une feuille de support est fixée à la surface du bord de la membrane à électrolyte polymère revêtue d'un catalyseur par un procédé de laminage.

5. Procédé selon la revendication 1,
dans lequel ladite au moins une feuille de support est perforée selon des motifs de perforation comprenant 5 à 20 trous par centimètre carré (cm²) de feuille, d'où il résulte que les trous possèdent un diamètre dans la gamme d'environ 0,2 mm à 3 mm.

6. Procédé selon la revendication 1,
dans lequel la membrane à électrolyte polymère est constituée de compositions d'acide sulfonique polymères, perfluorées, de polybenzimidazoles dopés, de polyéthercétones, et de polysulfones, ou d'autres matériaux conducteurs de protons.

7. Procédé selon la revendication 1,
dans lequel la membrane à électrolyte polymère possède une épaisseur dans la gamme de 10 à 200 µm.

8. Procédé selon la revendication 1,
dans lequel ladite au moins une feuille de support est constituée de polyester, de polyéthylène, de polypropylène, de polycarbonate, de polytétrafluoroéthylène, de polyuréthane, de polyamide, de polyimide, de papier, ou d'autres matériaux comparables.

9. Procédé selon la revendication 1,
dans lequel ladite au moins une feuille de support possède une épaisseur dans la gamme de 10 à 250 µm.

10. Procédé selon la revendication 1,
dans lequel la sérigraphie, la duplication par stencil, l'impression offset, l'impression par transfert, l'impression au couteau d'encrier ou la pulvérisation est utilisée comme procédé de revêtement.

11. Procédé selon la revendication 1, comprenant les étapes de
(a) revêtement de la face avant d'une membrane à électrolyte polymère à support intégré ayant une première feuille de support sur sa face arrière avec une couche de catalyseur et séchage,
(b) application d'une deuxième feuille de support à la face avant de la membrane à électrolyte polymère,
(c) retrait de la première feuille de support de la face arrière de la membrane à électrolyte polymère,
(d) revêtement de la face arrière de la membrane à électrolyte polymère avec une couche de catalyseur et séchage.

12. Procédé selon la revendication 11, comprenant en outre
l'application d'une première feuille de support à la face arrière d'une membrane à électrolyte polymère sans support.

13. Procédé selon la revendication 11, comprenant en outre
le retrait de la deuxième feuille de support après le revêtement de la face arrière de la membrane à électrolyte polymère.

14. Procédé selon la revendication 11, comprenant en outre
l'application d'un composant adhésif entre la feuille de support et la membrane à électrolyte polymère.

15. Procédé selon la revendication 11, comprenant en outre
le post-traitement de la membrane à électrolyte polymère revêtue dans de l'eau à des températures dans la gamme de 20 à 95°C.

16. Procédé selon la revendication 11,
dans lequel le séchage de la couche de catalyseur est réalisé au moyen d'air chaud, d'un rayonnement infrarouge, de micro-ondes, d'un plasma ou d'une combinaison de ceux-ci.

17. Procédé selon la revendication 11,
dans lequel la température de séchage se situe dans la gamme de 20 à 150°C et la durée de séchage se situe dans la gamme de 1 à 30 minutes.

18. Appareil pour la fabrication de membranes à électrolyte polymère revêtues d'un catalyseur à 3 couches à l'aide d'encres contenant un catalyseur par le procédé selon l'une quelconque des revendications 1 à 17, comprenant
un moyen pour soutenir la membrane à électrolyte polymère avec au moins une feuille de support pendant toutes les étapes de traitement.
